# EUROPEAN PATENT APPLICATION

(11) **EP 2 843 522 A1**
(43) Date of publication of application: **04.03.2015**
(21) Application number: 13780933.1
(22) Date of filing: 04.04.2013
(51) Int. Cl.: G06F 3/048, G06F 3/0488, H04M 1/00

(54) **PORTABLE INFORMATION TERMINAL**

(30) Priority: 27.04.2012 JP 2012102232
(71) Applicant: Sharp Kabushiki Kaisha, Osaka-shi, Osaka 545-8522 (JP)
(72) Inventor: KONISHI Haruna, Osaka-shi, Osaka 545-8522 (JP); KADOTA Takako, Osaka-shi, Osaka 545-8522 (JP); KOBAYASHI Shigeru, Osaka-shi, Osaka 545-8522 (JP); KUSUDA Kohji, Osaka-shi, Osaka 545-8522 (JP)
(74) Representative: Müller - Hoffmann & Partner
(86) International application number: PCT/JP2013/060316
(87) International publication number: WO 2013/161536

(57) **Abstract**

To provide a mobile information terminal that makes it possible to facilitate a touch operation on an image displayed in the upper area within a vertically long display screen provided on the front surface of a housing. The mobile information terminal is configured to include: a touch panel 20 that detects a touch operation on a vertically long display screen 21 provided on the front surface 13 of a thin housing 10; a slide sensor 4 that is provided on the left lateral surface 11 or right lateral surface 12 of the thin housing 10 and detects a sliding operation in the longer direction of the display screen 21; and drawing area control means adapted to, within the display screen 21, form a main drawing area 23b and a sub drawing area 23a, which are both touch operable, arranging the main drawing area 23b and the sub drawing area 23a in the longer direction, and on the basis of the sliding operation, interchange the order of the arrangement.

## Description

### [Field of the Invention]

The present invention relates to a mobile information terminal, and more specifically, to improving a mobile information terminal that is provided with a vertically long display screen on the front surface of a housing and includes a touch panel adapted to detect a touch operation on the display screen.

### [Background Art]

Mobile information terminals such as mobile phones and PDAs (Personal Digital Assistants) include one where a touch panel is placed on the front surface of a housing. The touch panel detects a touch operation on a detecting surface provided on a display screen. In the case of operating the touch panel with one hand while holding this sort of mobile information terminal with the one hand, an area difficult to operate may be formed within the display screen. In particular, in the case of operating a vertically long display screen with one hand, there is a problem that the upper area of the display screen is difficult to reach with a finger, and the touch operation is difficult to perform.

Meanwhile, there have conventionally been known a method that arranges operation icons such as icons for menu items in the lower area easy to operate with one hand and a method that rotates an arrangement including a plurality of menu items with a touch operation to move a desired menu item to a position easy to operate (e.g., Patent Literature 1). However, such methods cannot improve operability at the time of performing a touch operation on an image displayed in the upper area within a display screen.

Also, there has conventionally been known a mobile information terminal that displays part of an image in a drawing area within a display screen, and scrolls the image under display upward or downward with a touch operation (e.g.,

Patent Literature 2). However, once the upper end of the image reaches the upper end of the drawing area, the upper end part of the image cannot be scrolled toward the lower side within the drawing area. For this reason, it is impossible to facilitate the touch operation on the upper end part of the image displayed within the drawing area.

### [Prior Technical Document]

### [Patent Literature]

Patent Literature 1: Japanese Unexamined Patent Application Publication 2009-163356
Patent Literature 2: Japanese Translation of PCT International Publication 2009-518758

### [Disclosure of the Invention]

### [Problems to be solved by the Invention]

The present invention is made in consideration of the above-described situations, and intends to provide a mobile information terminal that makes it possible to facilitate a touch operation on an image displayed in the upper area within a display screen.

In particular, the present invention intends to provide a mobile information terminal that in the case of performing a touch operation with a finger of one hand on a vertically long display screen provided on the front surface of a housing while holding the housing with the one hand, regardless of an image displayed in the upper area, makes it possible to facilitate the touch operation on the image. Also, the present invention intends to provide a mobile information terminal that without narrowing a display screen or a drawing area, makes it possible to facilitate a touch operation on an image displayed in the upper area within the display screen.

Further, the present invention intends to provide a mobile information terminal that makes it possible to make a desired drawing area appear in the upper area within a display screen by repeatedly sliding a finger along a lateral surface of a housing, and then draw the drawing area to the lower area.

### [Means adapted to solve the Problems]

A mobile information terminal according to a first aspect of the present invention is configured to include: a touch panel that has a vertically long display screen provided on a front surface of a housing, and detects a touch operation on said display screen; a slide sensor that is provided on a left lateral surface or a right lateral surface of the housing and detects a sliding operation in a longer direction of the display screen; and drawing area control means adapted to, within the display screen, form a first drawing area and a second drawing area, which are both touch-operable, arranging the first drawing area and the second drawing area in the longer direction, and on the basis of the sliding operation, interchange an order of the arrangement.

According to such a configuration, the order of the arrangement of the first and second drawing areas is interchanged by the sliding operation, and therefore in the case of performing the touch operation on an image within a drawing area arranged on the upper side, the drawing area can be drawn to the lower side by performing the sliding operation. For this reason, in the case of, while holding the housing with one hand, performing the touch operation with a finger of the one hand on the vertically long display screen provided on the front surface of the housing, a touch operation on an image displayed in the upper area of the display screen can be facilitated. In particular, an image is not scrolled, but a drawing area on the upper side is drawn to the lower side, and therefore regardless of an image displayed in the upper area, the touch operation on the image can be facilitated.

Also, the slide sensor provided on the left or right lateral surface of the housing detects the sliding operation in the longer direction of the display screen, and therefore without narrowing the display screen or any of the drawing areas, the touch operation on an image displayed in the upper area within the display screen can be facilitated.

A mobile information terminal according to a second aspect of the present invention is, in addition to the above configuration, configured such that on the basis of the sliding operation to an upward direction or a downward direction in the longer direction, the drawing area control means divides an original drawing area of a vertically long rectangular shape to form the first and second drawing areas, and on the basis of the next sliding operation in the same direction, interchanges the order of the arrangement.

According to such a configuration, the original drawing area is divided by the upward or downward sliding operation to form the first and second drawing areas, and therefore by sliding a finger along a lateral surface of the housing, a desired drawing area can be made to appear in the upper area of the display screen. Also, by the next sliding operation in the same direction, the order of the arrangement can be interchanged, and therefore the drawing area appearing in the upper area can also be drawn to the lower area. Accordingly, by repeatedly sliding the finger along the lateral surface of the housing, a desired drawing area can be made to appear in the upper area, and then drawn to the lower area.

A mobile information terminal according to a third aspect of the present invention is, in addition to the above configuration, configured to include image display means adapted to display an original image in the original drawing area before the division, and after the division of the original drawing area, display a part of the original image in any one of the first and second drawing areas.

According to such a configuration, the part of the original image that was displayed in the original drawing area before the division is displayed in any one of the first and second drawing areas, and therefore the touch operation on the original image can be facilitated.

A mobile information terminal according to a fourth aspect of the present invention is, in addition to the above configuration, configured such that on the basis of the sliding operation to the upward direction in the case where the first drawing area displaying the part of the original image is arranged on a lower side, or on the basis of the sliding operation to the downward direction in the case where the first drawing area displaying the part of the original image is arranged on an upper side, the drawing area control means binds the first and second drawing areas to each other to form the original drawing area.

According to such a configuration, depending on whether the first drawing area displaying the part of the original image is arranged on the lower side or arranged on the upper side, the original drawing area can be restored by the upward or downward sliding operation.

A mobile information terminal according to a fifth aspect of the present invention is, in addition to the above configuration, configured to include image display means adapted to, in the first drawing area, display an image scrollable in the longer direction by the touch operation, and in the second drawing area, display an image including two or more operation icons selectable by the touch operation, in which the drawing area control means interchanges the order of the arrangement on the basis of the sliding operation to a upward direction or a downward direction in the longer direction.

According to such a configuration, in the case where the first drawing area is arranged in the upper area within the display screen, by performing the sliding operation to draw the first drawing area to the lower area, operability at the time of scrolling an image in the first drawing area can be improved. Also, in the case where the second drawing area is arranged in the upper area, by performing the sliding operation to draw the second drawing area to the lower area, operability at the time of selecting a desired operation icon can be improved. Further, by sliding a finger along a lateral surface of the housing, these drawing areas can be made to appear within the display screen.

A mobile information terminal according to a sixth aspect of the present invention is, in addition to the above configuration, configured to include character entry means adapted to, on a basis of the touch operation on any of the operation icons, enter a character preliminarily assigned to the operation icon into an entry area within the first drawing area. According to such a configuration, by performing the sliding operation to draw the second drawing area to the lower area, operability at the time of entering characters into the entry area within the first drawing area can be improved.

A mobile information terminal according to a seventh aspect of the present invention is, in addition to the above configuration, configured such that the slide sensor includes a touch pad having a detecting surface that is long in the longer direction and detects a touch operation on the detecting surface. According to such a configuration, by sliding a finger along the detecting surface of the touch pad, a drawing area arranged in the upper area within the display screen can be drawn to the lower area.

### [Effects of the Invention]

The mobile information terminal according to the present invention makes it possible to, in the case of performing the touch operation with a finger of one hand on the vertically long display screen provided on the front surface of the housing while holding the housing with the one hand, facilitate the touch operation on an image displayed in the upper area of the display screen. In particular, an image is not scrolled but a drawing area on the upper side is drawn to the lower side, and therefore regardless of an image displayed in the upper area, the touch operation on the image can be facilitated. Also, the slide sensor provided on the left or right lateral surface of the housing detects the sliding operation in the longer direction of the display screen, and therefore without narrowing the display screen or any of the drawing areas, the touch operation on an image displayed in the upper area of the display screen can be facilitated.

Also, according to the present invention, by repeatedly sliding a finger along a lateral surface of the housing, a desired drawing area can be made to appear in the upper area within the display screen, and then drawn to the lower area.

### [Brief Description of the Drawings]

Fig. 1 is a diagram illustrating a configuration example of a mobile information terminal 1 according to an embodiment of the present invention.
Fig. 2 is a diagram illustrating an example of a use mode at the time of operating the mobile information terminal 1 in Fig. 1 with one hand, and illustrates the case of operating a display screen 21 with the thumb 5a of the right hand 5.
Fig. 3 is a diagram illustrating an example of the action of the mobile information terminal 1 in Fig. 1, and illustrates a situation where an original drawing area 23 is divided by a downward sliding operation.
Fig. 4 is a diagram illustrating an example of the action of the mobile information terminal 1 in Fig. 1, and illustrates a situation where the arrangement order of the drawing areas 23a and 23b are interchanged by the downward sliding operation.
Fig. 5 is a diagram illustrating an example of the action of the mobile information terminal 1 in Fig. 1, and illustrates a situation where the original drawing area 23 is divided by an upward sliding operation.
Fig. 6 is a diagram illustrating an example of the action of the mobile information terminal 1 in Fig. 1, and illustrates a situation where the original drawing area 23 is restored by the upward or downward sliding operation.
Fig. 7 is a diagram illustrating an example of the action of the mobile information terminal 1 in Fig. 1, in which an entry area 6 is formed in the drawing area 23b, and soft keys 7 are formed in the drawing area 23a.
Fig. 8 is a block diagram illustrating an example of a functional configuration inside the mobile information terminal 1 in Fig. 1.
Fig. 9 is a flowchart illustrating an example of the action of the mobile information terminal 1 in Fig. 1, and illustrates a processing procedure up to dividing the original drawing area 23 to form the drawing areas 23a and 23b.
Fig. 10 is a flowchart illustrating an example of the action of the mobile information terminal 1 in Fig. 1, and illustrates a processing procedure after the formation of the drawing areas 23a and 23b.

### [Description of Preferred embodiments]

### <Mobile information terminal 1>

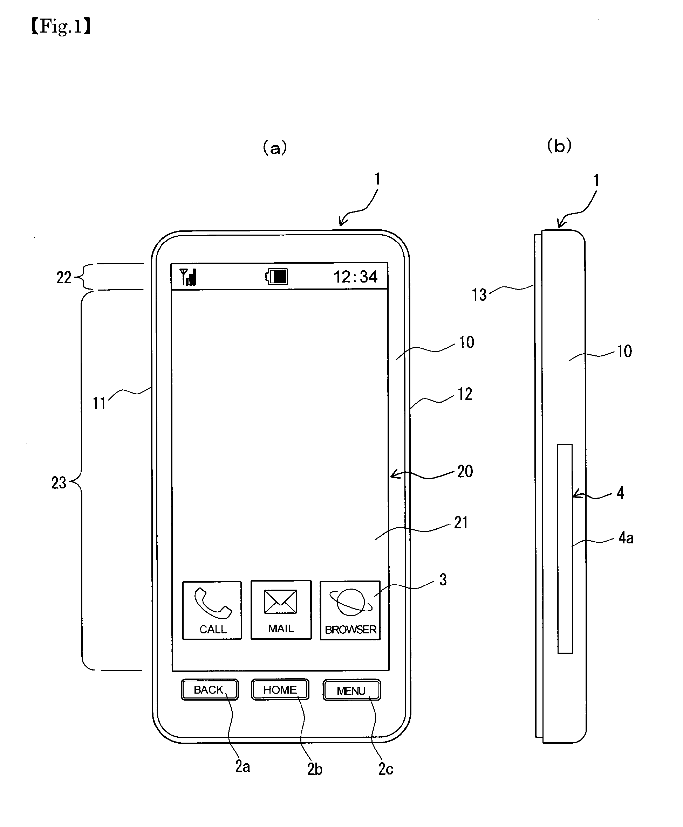

Fig. 1 is a diagram illustrating a configuration example of a mobile information terminal 1 according to an embodiment of the present invention. In the diagram, (a) illustrates the front surface 13 of the mobile information terminal 1, and (b) illustrates the right lateral surface 12. The diagram illustrates the mobile information terminal 1 where one principal surface of a thin housing 10 formed in a vertically long rectangular parallelepiped shape is set as the front surface 13, and on the front surface 13, a vertically long display screen 21 is provided.

When gripping the thin housing 10 with any one of the left and right hands with the longer direction of the display screen 21 coinciding with the vertical direction, the shorter direction of the display screen 21 coincides with the horizontal direction as viewed from a user facing the display screen 21. For example, the mobile information terminal 1 is a mobile phone that communicates with a base station, and through a mobile network, communicates with another communication terminal.

On the front surface 13 of the thin housing 10, a touch panel 20 and operation keys 2a to 2c are provided, and on the right lateral surface 12, a slide sensor 4 is provided. The touch panel 20 displays a terminal state, operation icons 3, and the like on the display screen 21, as well as detecting a touch operation on the display screen 21.

The display screen 21 is formed in a rectangular shape, within which a pictogram area 22 for displaying the terminal state using pictograms, and an original drawing area 23 for displaying an image including the operation icons 3 and the like are formed. The pictogram area 22 is a horizontally-long belt-like drawing area, in which a radio wave reception condition, a remaining battery level of an internal battery, current time, and the like are displayed. The original drawing area 23 is formed in a vertically long rectangular shape.

The operation icons 3 are touch objects that are preliminarily assigned with various functions, and for selecting the assigned functions or performing the functions, and as the operation icons 3, symbols representing the assigned functions are displayed, respectively. In this example, the pictogram area 22 is arranged in the upper end part within the display screen 21, and the three operation icons 3 are arranged in the lower area within the display screen 21. Specifically, a telephone icon, mail icon, and browser icon are arranged as the operation icons 3.

The telephone icon is an operation icon assigned with a telephone function for responding at the time of incoming call or calling. The mail icon is an operation icon assigned with a mail function for editing an electronic mail or browsing transmission and reception mails. The browser icon is an operation icon assigned with a web browser function for connecting to the Internet, browsing websites, and downloading web content.

The operation keys 2a to 2c are physical keys that are preliminarily assigned with various functions and for performing the assigned functions by performing pressing operations, respectively. The operation key 2a is a return key for returning to the previous screen. The operation key 2b is a home key for displaying a home screen. The operation key 2c is a menu key for displaying a menu screen. These operation keys 2a to 2c are arranged in the lower end part of the thin housing 10.

The slide sensor 4 is an operation part for dividing the original drawing area 23 into two drawing areas or interchanging arrangement order of the divided drawing areas, and detects a sliding operation in the longer direction of the display screen 21, i.e., in the vertical direction. The slide sensor 4 has a vertically long detecting surface 4a, and includes a touch pad adapted to detect a touch operation on the detecting surface 4a. The detecting surface 4a is formed in an elongated rectangular shape.

The slide sensor 4 detects an operational position of the touch operation with a finger, i.e., at least a one-dimensional position in the vertical direction. The sliding operation includes a series of moving operations defined by the operation start and end of such a touch operation.

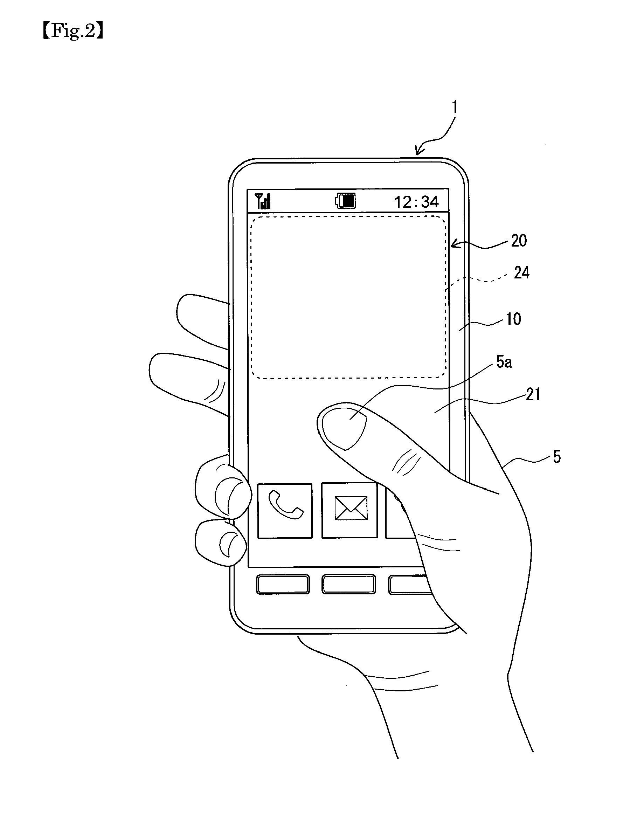

Fig. 2 is a diagram illustrating an example of a use mode at the time of operating the mobile information terminal 1 in Fig. 1 with one hand, and illustrates the case of operating the display screen 21 with the thumb 5a of the right hand 5 while gripping the mobile information terminal 1 with the right hand 5. In the case of holding the lower part of the thin housing 10 with the right hand 5 and operating the display screen 21 with the thumb 5a, the upper area 24 within the display screen 21 is difficult to reach with the finger, and the touch operation is difficult to perform.

Even in such a case, the slide sensor 4 is provided in a position easy to operate. By performing the sliding operation on the slide sensor 4, a drawing area arranged in the upper area 24 is moved to the lower area. That is, by sliding the thumb 5a along the lateral surface of the thin housing 10 in the vertical direction, the drawing area in the upper area 24 can be moved to the lower area. For this reason, even in the case of an operation icon displayed in the upper area 24, the touch operation with the thumb 5a can be easily performed by moving the drawing area including the operation icon to the lower area.

### <Division of original drawing area 23>

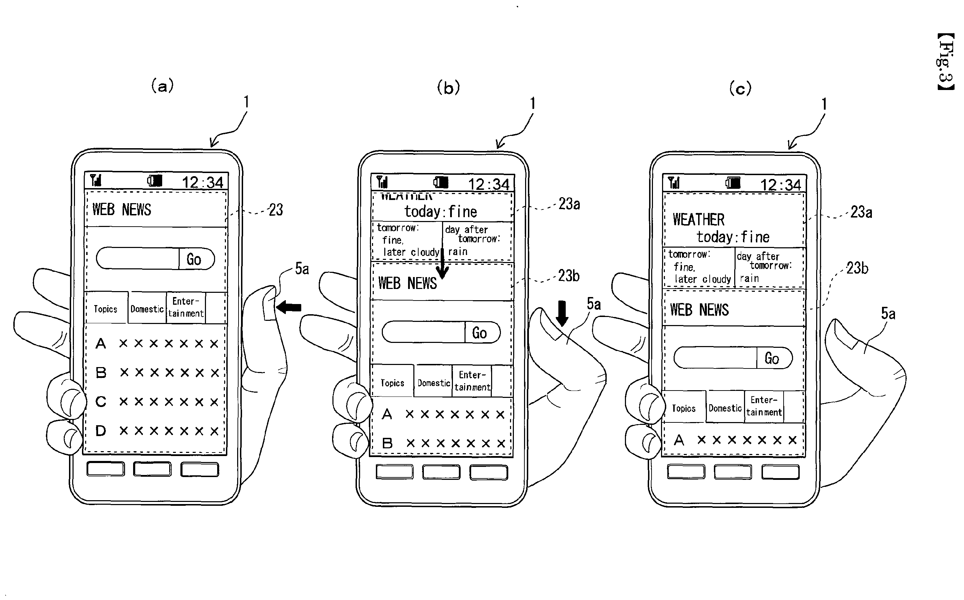

Fig. 3 is a diagram illustrating an example of the action of the mobile information terminal 1 in Fig. 1, and illustrates a situation where a downward sliding operation with the thumb 5a divides the original drawing area 23 into a main drawing area 23b and a sub drawing area 23a. In the diagram, (a) illustrates a situation immediately after the start of a drag operation on the slide sensor 4, and (b) illustrates a situation in the middle of the drag operation. Also, (c) illustrates a situation immediately after the end of the drag operation.

In the original drawing area 23, an original image indicating content information downloaded from a web server is displayed. The original image is larger in vertical size than the original drawing area 23, and can be scrolled by a flick or drag operation on the display screen 21. The flick operation refers to a touch operation that slides a finger on the display screen 21 so as to quickly sweep. The drag operation refers to a touch operation that slides a finger with the finger being in contact with the display screen 21 or the detecting surface 4a.

Also, the original image includes operation icons such as a search button, tab selection button, and menu item selection button, and by performing a tap operation on any of the operation icons, a search function can be performed, or a desired tab or menu item can be selected. The tap operation refers to a touch operation that is performed so as to lightly strike the display screen 21.

The original drawing area 23 is divided by performing the drag operation on the slide sensor 4 in the vertical direction, and thereby the main drawing area 23b and the sub drawing area 23a are formed. Specifically, by sliding the thumb 5a downward, the original drawing area 23 is divided to form the drawing areas 23a and 23b.

The main drawing area 23b is a drawing area for displaying part of the original image that was displayed in the original drawing area 23 before the division. An image under display in the main drawing area 23b can be scrolled by the flick or drag operation on the display screen 21. On the other hand, the sub drawing area 23a is a new drawing area that appears by the division. For example, in the sub drawing area 23a, an image indicating the content information related to the original image that was displayed in the original drawing area 23 before the division is displayed.

The main drawing area 23b and the sub drawing area 23a are respectively formed in rectangular shapes, and formed to be vertically arranged. Also, the sub drawing area 23a is shorter in vertical length than the main drawing area 23b.

By starting the downward drag operation, the sub drawing area 23a appears so as to be drawn downward from the upper side of the original drawing area 23 (Fig. 3(b)), and by ending the drag operation, the size and shape thereof are fixed (Fig. 3(c)). That is, the sub drawing area 23a appearing by the downward drag operation on the slide sensor 4 is arranged on the upper side, and the main drawing area 23b is arranged on the lower side.

In the case of separating the thumb 5a from the detecting surface 4a of the slide sensor 4 in the middle of the drag operation, the original drawing area 23 is restored, or the sizes and shapes of the main drawing area 23b and sub drawing area 23a are fixed. Whether to restore the original drawing area 23 or fix the main drawing area 23b and the sub drawing area 23a is determined by, for example, a finger sliding amount.

### <Interchange of arrangement order>

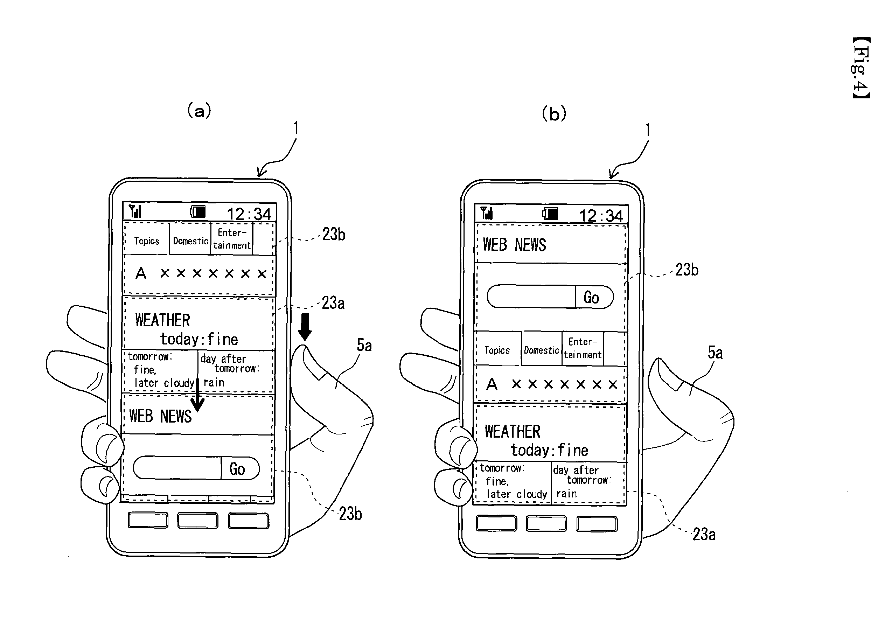

Fig. 4 is a diagram illustrating an example of the action of the mobile information terminal 1 in Fig. 1, and illustrates a situation where the downward sliding operation with the thumb 5a interchanges the arrangement order of the main drawing area 23b and the sub drawing area 23a. In the diagram, (a) illustrates a situation in the middle of the downward drag operation, and (b) illustrates a situation immediately after the end of the drag operation.

The arrangement order of the main drawing area 23b and the sub drawing area 23a can be interchanged by performing the sliding operation on the slide sensor 4. Immediately after the original image area 23 has been divided by the downward sliding operation, another downward sliding operation interchanges the arrangement order.

Specifically, by starting the downward drag operation, the sub drawing area 23a is moved downward (Fig. 4(a)), and by ending the drag operation, the position of the sub drawing area 23a is fixed (Fig. 4(b)). In the middle of the downward movement of the sub drawing area 23a, the main drawing area 23b is divided into upper and lower parts.

As described, by performing the downward sliding operation in the state where the sub drawing area 23a is arranged on the upper side, the sub drawing area 23a can be drawn to the lower area. Also, by performing the upward sliding operation in a state where the sub drawing area 23a is arranged on the lower side, the main drawing area 23b can be drawn to the lower area.

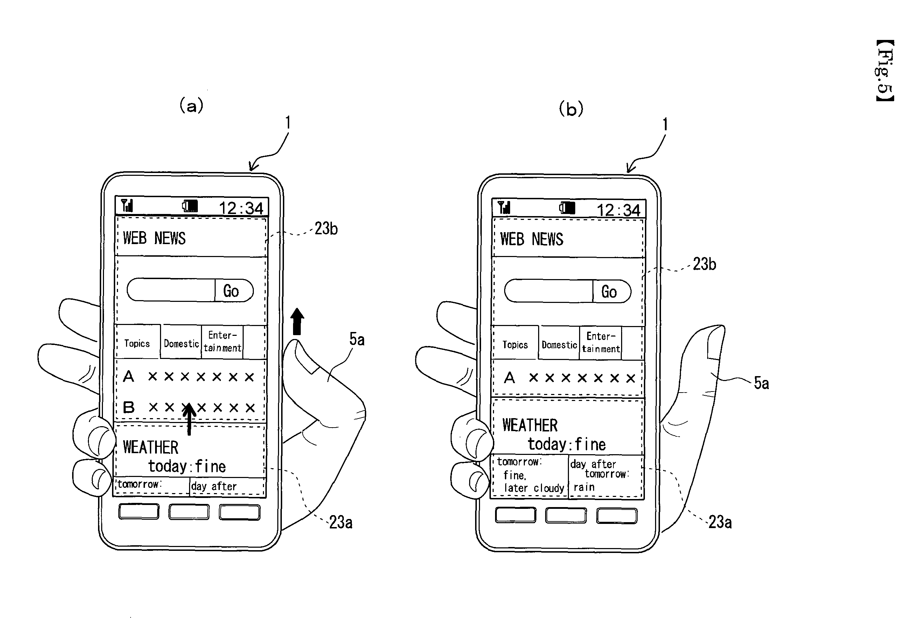

Fig. 5 is a diagram illustrating an example of the action of the mobile information terminal 1 in Fig. 1, and illustrates a situation where the upward sliding operation with the thumb 5a divides the original drawing area 23 into the main drawing area 23b and the sub drawing area 23a. In the diagram, (a) illustrates a situation in the middle of the upward drag operation, and (b) illustrates a situation immediately after the end of the drag operation.

By starting the upward drag operation, the sub drawing area 23a appears so as to be drawn upward from the lower side of the original drawing area 23 (Fig. 5(a)), and by ending the drag operation, the size and shape are fixed (Fig. 5(b)). That is, the sub drawing area 23a appearing by the upward drag operation on the slide sensor 4 is arranged on the lower side, and the main drawing area 23b is arranged on the upper side.

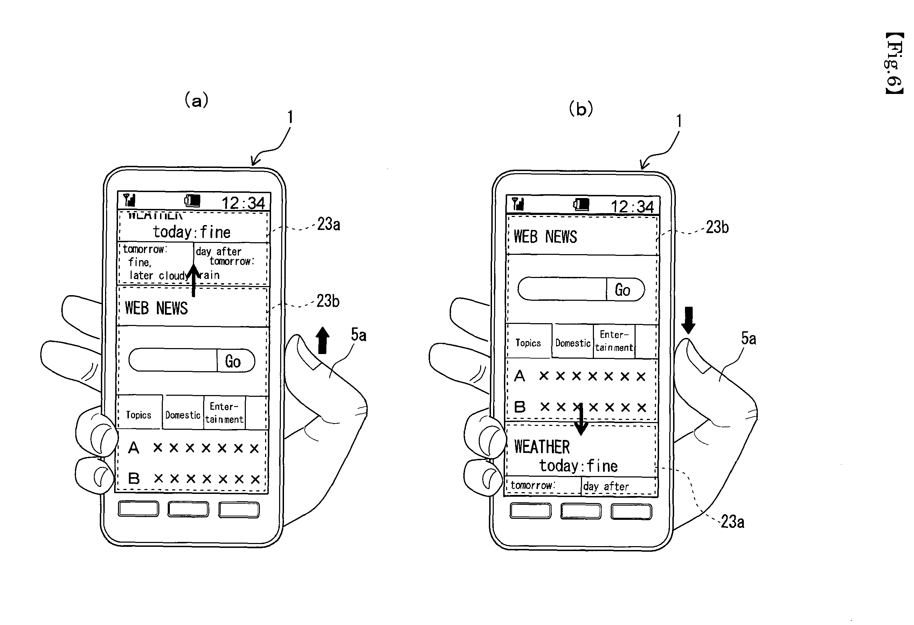

Fig. 6 is a diagram illustrating an example of the action of the mobile information terminal 1 in Fig. 1, and illustrates a situation where the upward or downward sliding operation restores the original drawing area 23. In the diagram, (a) illustrates the case where the upward drag operation restores the original drawing area 23, and (b) illustrates the case where the downward drag operation restores the original drawing area 23.

By performing the upward drag operation in the state where the sub drawing area 23a is arranged on the upper side, the main drawing area 23b and the sub drawing area 23a can be bound to each other to restore the original drawing area 23 (Fig. 6(a). On the other hand, by performing the downward drag operation in the state where the sub drawing area 23a is arranged on the lower side, the main drawing area 23b and the sub drawing area 23a can be bound to each other to restore the original drawing area 23.

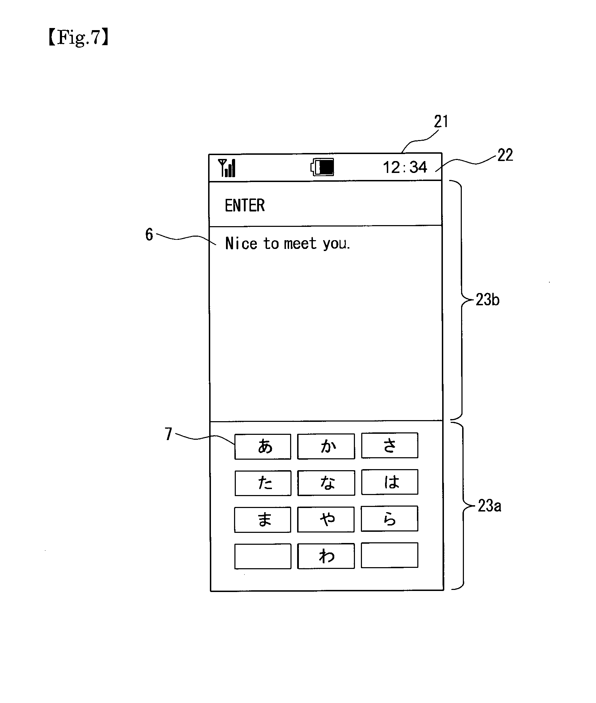

Fig. 7 is a diagram illustrating an example of the action of the mobile information terminal 1 in Fig. 1, in which a character entry area 6 is formed in the main drawing area 23b, and key arrangement including a plurality of soft keys 7 is formed in the sub drawing area 23a. The main drawing area 23b is arranged on the upper side, in which part of the original image including the entry area 6 where characters are to be entered is displayed.

On the other hand, in the sub drawing area 23a, an image including the key arrangement configured to include the plurality of soft keys 7 for entering characters is displayed. The soft keys 7 are operation icons respectively assigned with predetermined characters such as kana (Japanese syllabary) characters.

By displaying such key arrangement in the sub drawing area 23a, operability at the time of operating the mobile information terminal 1 with one hand to enter characters can be improved. Also, in the case of scrolling an image in the main drawing area 23b, it is only necessary to perform the upward sliding operation to thereby draw the main drawing area 23b to the lower area, and then perform the flick or drag operation within the main drawing area 23b.

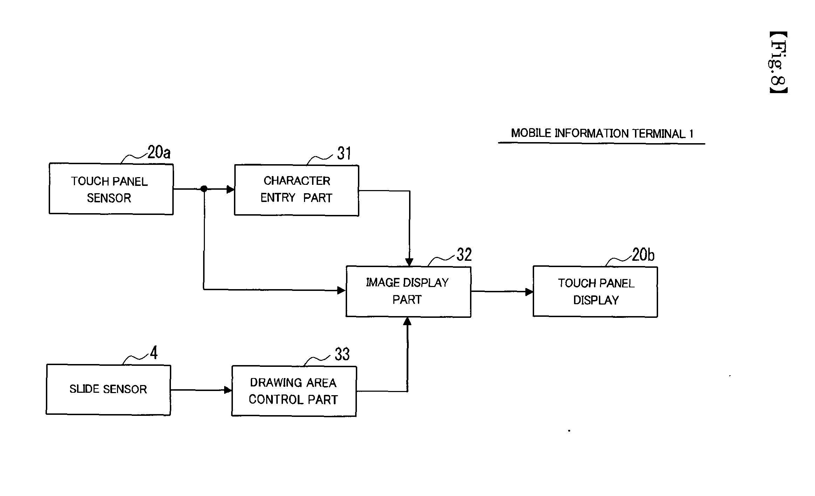

Fig. 8 is a block diagram illustrating an example of a functional configuration inside the mobile information terminal 1 in Fig. 1. The mobile information terminal 1 is configured to include the slide sensor 4, touch panel sensor 20a, touch panel display 20b, character entry part 31, image display part 32, and drawing area control part 33.

The slide sensor 4 detects the sliding operation in the vertical direction, and outputs a detection signal to the drawing area control part 33. For example, as the slide sensor 4, a capacitance touch pad adapted to sense a change in capacitance at the time of bringing a finger close to the detecting surface 4a is used. The slide sensor 4 detects the operation start and end of the touch operation on the detecting surface 4a and one-dimensional positions of the touch operation.

The touch panel sensor 20a detects the touch operation on the display screen 21 and outputs a detection signal to the character entry part 31 and the image display part 32. As the touch panel sensor 20a, for example, a capacitance touch sensor adapted to sense a change in capacitance at the time of bringing a finger close to the display screen 21 is used. The touch panel display 20b is a display device having the display screen 21.

The image display part 32 generates image data for displaying the original image in the original image area 23 within the display screen 21, and outputs the image data to the touch panel display 20b. The image display part 32 scrolls the original image on the basis of the flick or drag operation on the display screen 21.

The drawing area control part 33 generates control data for, on the basis of the upward or downward sliding operation, dividing the original drawing area 23 to form the main drawing area 23b and the sub drawing area 23a, and outputs the control data to the image display part 32. The main drawing area 23b and the sub drawing area 23a are both touch-operable drawing areas, and arranged in the vertical direction within the display screen 21. That is, by performing the upward or downward sliding operation, a desired drawing area can be made to appear in the upper or lower area within the display screen 21.

In the sub drawing area 23a, application activating icons respectively for activating application programs, an active application list indicating active application programs, a music player for reproducing music data, a mail text of a received mail, and the like are displayed.

Immediately after the division by the upward sliding operation, the main drawing area 23b is arranged on the upper side, and the sub drawing area 23a is arranged on the lower side. On the other hand, immediately after the division by the downward sliding operation, the main drawing area 23b is arranged on the lower side and the sub drawing area 23a is arranged on the upper side.

Also, the drawing area control part 33 interchanges the arrangement order of the main drawing area 23b and the sub drawing area 23a on the basis of the upward or downward sliding operation. Specifically, on the basis of the downward sliding operation in the case where the sub drawing area 23a is arranged on the upper side, the drawing area control part 33 moves the sub drawing area 23a to the lower area. On the other hand, on the basis of the upward sliding operation in the case where the sub drawing area 23a is arranged on the lower side, the drawing area control part 33 moves the main drawing area 23b to the lower area.

That is, by performing the upward or downward sliding operation, the order of the arrangement of the main drawing area 23b and the sub drawing area 23a is interchanged, and therefore a drawing area arranged in the upper area within the display screen 21 can be drawn to the lower area.

The image display part 32 displays the original image in the original drawing area 23 before the division, and after the division of the original drawing area 23, displays the part of the original image in the main drawing area 23b. That is, the original drawing area 23 before the division is reduced as the main drawing area 23b in an area on the same side as a sliding direction at the time of sliding a finger along the lateral surface of the thin housing 10.

Also, the drawing area control part 33 binds the main drawing area 23b and the sub drawing area 23a to each other to form the original drawing area 23 on the basis of the upward sliding operation in the case where the main drawing area 23b is arranged on the lower side, or the downward sliding operation in the case where the main drawing area 23b is arranged on the upper side. That is, depending on whether the main drawing area 23b is arranged on the lower side or arranged on the upper side, the drawing area control part 33 can restore the original drawing area 23 on the basis of the upward or downward sliding operation.

On the basis of touch operations on soft keys 7, the character entry part 31 generates control data for entering characters preliminarily assigned to the soft keys 7 into the entry area 6 within the main drawing area 23b, and outputs the control data to the image display part 32.

By performing the upward or downward sliding operation to draw the sub drawing area 23a to the lower area, operability at the time of entering characters into the entry area 6 within the main drawing area 23b can be improved.

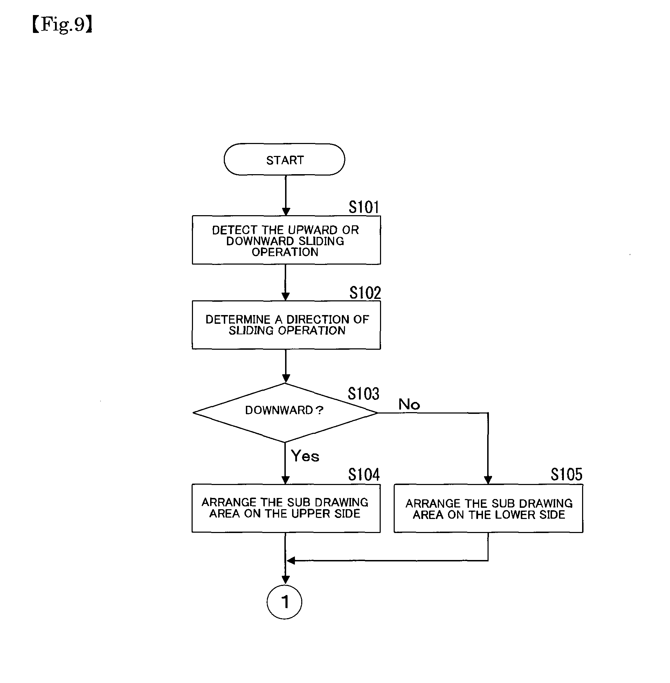

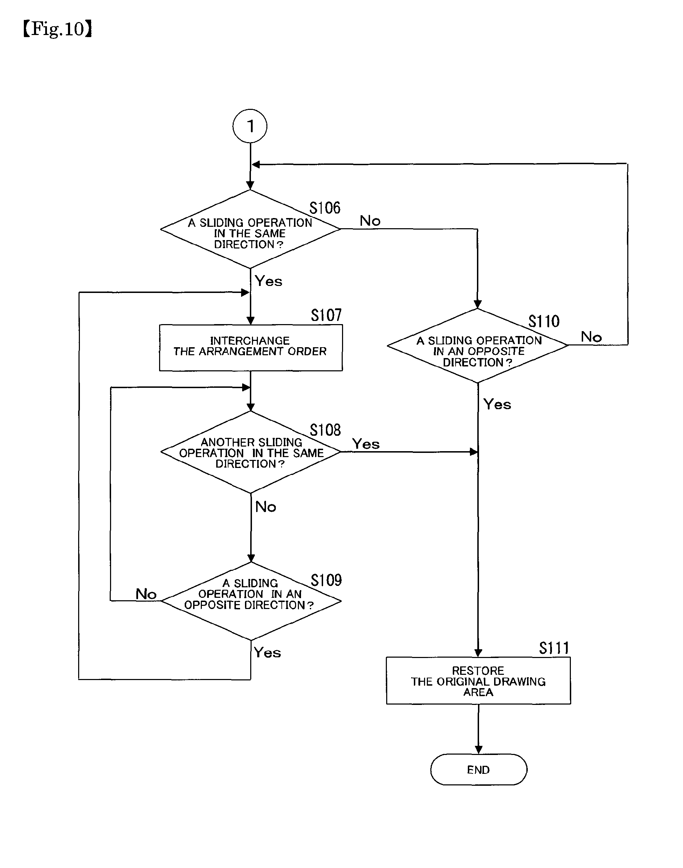

Steps S101 to S111 in Figs. 9 and 10 represent a flowchart illustrating an example of the action of the mobile information terminal 1 in Fig. 1. Fig. 9 illustrates a processing procedure up to dividing the original drawing area 23 by a sliding operation to form the drawing areas 23a and 23b. Fig. 10 illustrates a processing procedure after the formation of the drawing areas 23a and 23b.

First, in the case where the slide sensor 4 detects the upward or downward sliding operation (Step S101), the drawing area control part 33 determines a direction of the sliding operation (Step S102). In the case of the downward sliding operation, the drawing area control part 33 divides the original drawing area 23 so as to arrange the sub drawing area 23a on the upper side (Steps S103 and S104), whereas in the case of the upward sliding operation, the drawing area control part 33 divides the original drawing area 23 so as to arrange the sub drawing area 23a on the lower side (Steps S103 and S105).

Then, in the case where a sliding operation to the same direction is detected (Step S106), the drawing area control part 33 interchanges the arrangement order of the main drawing area 23b and the sub drawing area 23a (Step S107). On the other hand, in the case where a sliding operation to an opposite direction is detected, the drawing area control part 33 binds the main drawing area 23b and the sub drawing area 23a to each other to restore the original drawing area 23, and ends this process (Steps S106, S110 and S111).

In the case where another sliding operation to the same direction is detected after the interchange of the arrangement order, the drawing area control part 33 binds the main drawing area 23b and the sub drawing area 23a to each other to restore the original drawing area 23, and ends this process (Steps S108 and S111). On the other hand, in the case where a sliding operation to an opposite direction is detected, the drawing area control part 33 repeats a processed procedure after Step S107.

In the present embodiment, the order of the arrangement of the drawing areas 23a and 23b is interchanged by a sliding operation, and therefore in the case of performing the touch operation on an image within a drawing area arranged on the upper side, the drawing area can be drawn to the lower side by performing the sliding operation. For this reason, in the case of while holding the thin housing 10 with one hand, performing the touch operation with the finger of the one hand on the vertically long display screen 21 provided on the front surface 13 of the thin housing 10, the touch operation on an image displayed in the upper area 24 within the display screen 21 can be facilitated. In particular, an image is not scrolled, but a drawing area on the upper side is drawn to the lower side, and therefore regardless of an image displayed on the upper area 24, the touch operation on the image can be facilitated.

Also, the slide sensor 4 provided on the right lateral surface 12 of the thin housing 10 detects a sliding operation in the longer direction of the display screen 21, and therefore without narrowing the display screen 21 or the drawing area 23, 23a, or 23b, the touch operation on an image displayed on the upper area within the display screen 21 can be facilitated.

Further, in the case where the main drawing area 23b is arranged in the upper area 24 within the display screen 21, by performing the sliding operation to draw the main drawing area 23b to the lower area, operability at the time of scrolling an image in the main drawing area 23b can be improved. On the other hand, in the case where the sub drawing area 23a is arranged in the upper area, by performing the sliding operation to draw the sub drawing area 23a to the lower area, operability at the time of selecting a desired operation icon can be improved. In particular, by performing the sliding operation to draw the sub drawing area 23a to the lower area, operability at the time of entering characters into the entry area 6 within the main drawing area 23b can be improved.

Note that in the present embodiment, described is the example of the case where the upward or downward sliding operation divides the original drawing area 23 to form the main drawing area 23b and the sub drawing area 23a; however, the present invention is not limited to this. For example, an embodiment having a configuration in which every time a sliding operation in the vertical direction is sensed, the arrangement order of the main drawing area 23b and the sub drawing area 23a are interchanged is also included in the present invention.

Also, in the present embodiment, described is the example of the case where the slide sensor 4 is placed on the right lateral surface 12 of the thin housing 10; however, the present invention does not limit an arrangement mode of the slide sensor 4 to this. For example, in order to make operations easy even in any of the case of operating the mobile information terminal 1 with the right hand and the case of operating the mobile information terminal 1 with the left hand, the present invention may be configured to place a slide sensor 4 on each of the left lateral surface 11 and right lateral surface 12 of the thin housing 10.

Further, in the present embodiment, described is the example of the case where the mobile information terminal 1 is configured to include the thin housing 10 of the rectangular parallelepiped shape; however, the present invention can also be applied to a slide type mobile terminal in which a display housing and an operation housing are vertically slidably connected to each other.

### [Description of Reference Numerals]

- 1: mobile information terminal
- 2a to 2c: operation key
- 3: operation icon
- 4: slide sensor
- 4a: detecting surface
- 6: character entry area
- 7: soft key
- 10: thin housing
- 11: left lateral surface
- 12: right lateral surface
- 13: front surface
- 20: touch panel
- 20a: touch panel sensor
- 20b: touch panel display
- 21: display screen
- 22: pictogram area
- 23: original drawing area
- 23a: sub drawing area
- 23b: main drawing area
- 24: upper area
- 31: character entry part
- 32: image display part
- 33: drawing area control part

## Claims

1. A mobile information terminal comprising:
a touch panel that has a vertically long display screen provided on a front surface of a housing, and detects a touch operation on said display screen;
a slide sensor that is provided on a left lateral surface or a right lateral surface of said housing and detects a sliding operation in a longer direction of said display screen; and
drawing area control means adapted to form a first drawing area and a second drawing area within said display screen, arranging the first drawing area and the second drawing area in said longer direction, the first drawing area and the second drawing area being both touch-operable, and on a basis of said sliding operation, interchange an order of said arrangement.

2. The mobile information terminal according to claim 1, wherein
on a basis of the sliding operation to an upward direction or an downward direction in said longer direction, said drawing area control means divides an original drawing area of a vertically long rectangular shape to form the first and second drawing areas, and on a basis of the next sliding operation in the same direction, interchanges the order of said arrangement.

3. The mobile information terminal according to claim 2, comprising
image display means adapted to display an original image in said original drawing area before the division, and after the division of said original drawing area, display a part of the original image in any one of the first and second drawing areas.

4. The mobile information terminal according to claim 3, wherein
on a basis of said sliding operation to the upward direction in a case where the first drawing area displaying the part of said original image is arranged on a lower side, or on a basis of said sliding operation to the downward direction in a case where the first drawing area displaying the part of the original image is arranged on an upper side, said drawing area control means binds the first and second drawing areas to each other to form said original drawing area.

5. The mobile information terminal according to any of claims 1 to 4, comprising
image display means adapted to, in the first drawing area, display an image scrollable in said longer direction by said touch operation, and in the second drawing area, display an image including two or more operation icons selectable by said touch operation, wherein
said drawing area control means interchanges the order of said arrangement on the basis of the sliding operation to an upward direction or a downward direction in said longer direction.

6. The mobile information terminal according to claim 5, comprising
character entry means adapted to, on a basis of said touch operation on any of said operation icons, enter a character preliminarily assigned to the operation icon into an entry area within the first drawing area.

7. The mobile information terminal according to any of claims 1 to 6, wherein
said slide sensor includes a touch pad having a detecting surface that is long in said longer direction and detects a touch operation on said detecting surface.
